(19) Europäisches Patentamt
European Patent Office
Office européen des brevets

(11) Veröffentlichungsnummer: **0 087 046**
**A1**

(12) # EUROPÄISCHE PATENTANMELDUNG

(21) Anmeldenummer: 83101120.0

(22) Anmeldetag: 07.02.83

(51) Int. Cl.$^3$: **C 08 G 75/02**

(30) Priorität: 19.02.82 DE 3205994

(43) Veröffentlichungstag der Anmeldung: 31.08.83 Patentblatt 83/35

(84) Benannte Vertragsstaaten: BE DE FR GB IT

(71) Anmelder: BAYER AG
Zentralbereich Patente, Marken und Lizenzen
D-5090 Leverkusen 1, Bayerwerk(DE)

(72) Erfinder: Ostlinning, Edgar, Dr.
Rembrandtstrasse 37
D-4000 Duesseldorf(DE)

(72) Erfinder: Idel, Karsten, Dr.
Scheiblerstrasse 81
D-4150 Krefeld(DE)

(72) Erfinder: Freitag, Dieter, Dr.
Hasenheide 10
D-4150 Krefeld(DE)

(54) **Verfahren zur Herstellung von Polyarylensulfiden mit erhöhter thermischer und chemischer Belastbarkeit.**

(57) Gegenstand der vorliegenden Erfindung ist ein Verfahren zur Herstellung von Polyarylensulfiden, das dadurch gekennzeichnet ist, daß man das für die Reaktion eingesetzte Lösungsmittel vor und gegebenenfalls während der Polykondensation von gelöstem Sauerstoff befreit.



Croydon Printing Company Ltd.

BAYER AKTIENGESELLSCHAFT 5090 Leverkusen, Bayerwerk

Zentralbereich
Patente, Marken und Lizenzen PS/ABc

## Verfahren zur Herstellung von Polyarylensulfiden mit erhöhter thermischer und chemischer Belastbarkeit

Polyarylensulfide sind bekannt (vgl. US-PS 2 538 941 und 2 513 188). Sie können aus den entsprechenden Halogenaromaten und Alkali- oder Erdalkalisulfiden hergestellt werden. Man kann in Masse arbeiten oder polare Lösungsmittel mitverwenden. So werden nach den in US-PS 3 354 129 beschrieben Verfahren monomere und polymere Sulfide durch Umsetzung von mindestens einer cyclischen Verbindung, die eine Doppelbindung zwischen benachbarten Ringatomen enthält, und die wenigstens durch ein Halogenatom substituiert ist, mit einem Alkalisulfid in einem polaren Solvens wie Amid, Lactam oder Sulfon bei erhöhter Temperatur erhalten. Polyhalogenverbindungen können als Verzweiger eingesetzt werden.

In DE-AS 2 453 749 werden Carboxylate als Reaktionsbeschleuniger und neben Alkalisulfiden auch organische Thioverbindungen als Schwefelspender beansprucht.

Gemäß DE-OS 2 623 363 bzw. US-PS 4 038 261 werden als Katalysatoren für die Herstellung von Arylensulfidpolymeren Lithiumchlorid oder Lithiumcarboxylat eingesetzt.

N-Methylpyrrolidon und Alkalihydroxide vervollständigen das Katalysatorsystem.

Gemäß US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt.

Gemäß DE-OS 2 623 362 bzw. US-PS 4 038 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäß DE-OS 2 623 333 bzw. US-PS 4 046 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

In US-PS 4 038 260 werden Alkalimetallsulfonate und in US-PS 4 039 518 Lithiumcarbonat und Lithiumborat verwendet.
Polyarylensulfide mit verringertem Schmelzfließverhalten können mit Trialkaliphosphat-Katalysatoren (DE-OS 2 930 710, Le A 19 603) oder Alkaliphosphonat-Katalysatoren (DE-OS 2 930 797, Le A 19 604) oder Alkalifluorid-Katalysatoren (DE-OS 30 19 732, Le A 19 521) erhalten werden.

In DE-OS 2 623 333 wird die üblicherweise vor der Umsetzung mit Dihalogenaromaten in dem polaren Lösungsmittel durchgeführte Entwässerung in zwei Stufen vorgenommen. Zuerst wird das Hydrat des Katalysators Lithiumacetat entwässert und in einem zweiten Schritt anschließend das Natriumsulfidhydrat.

Im allgemeinen werden die p-Polyphenylensulfide noch einem an die Reaktion anschließenden Härtungs- oder Curingschritt unterworfen (z.B. US-PS 3 717 620, US-PS 3 524 835, US-PS 3 839 301), bei dem über Kettenverlängerungs- und Verzweigungsreaktionen die Eigenschaften verbessert werden sollen.

Ohne diesen Härtungsschritt besitzen die p-Polyphenylensulfide im allgemeinen eine nur niedrige Schmelzviskosität, die eine thermoplastische Verarbeitung nicht zuläßt.

Gemäß US-PS 3 919 177 soll unter ausgewählten Bedingungen mit Hilfe des Katalysatos Lithiumcarboxylat erreicht werden, daß das erzeugte p-Polyphenylensulfid ohne vorherige Härtung zu Fasern schmelzversponnen werden kann. In der US-PS 4 116 947 bzw. DE-OS 2 817 731 soll durch eine besondere Menge Restwasser und gegebenenfalls in Anwesenheit von Carboxylaten erreicht werden, daß die resultierenden p-Polyphenylensulfide ohne Härtungsschritt zu Fasern versponnen und extrudiert, sowie formgepreßt werden können.

Polyarylensulfide sind thermoplastische Werkstoffe mit sehr guter Wärmeformbeständigkeit.

Bei niedrigeren Temperaturen werden diese Polymere auch durch keinerlei Lösungsmittel angegriffen oder abgebaut. Bei hohen Temperaturen (z.B. > 280°C) jedoch werden die Polyarylensulfide abgebaut und schließlich zu rein löslichen Komponenten zersetzt. Besonders nachteilig ist diese Eigenschaft bei der Herstellung des Polymeren, da neben dem Molekülaufbau ein Molekülabbau einhergeht, durch den die Eigenschaften des Produktes schon bei geringfügig unterschiedlichen Reaktionszeiten zunichte gemacht werden können.

Der Erfindung liegt die Erkenntnis zugrunde, daß lineare und verzweigte Polyarylensulfide mit hoher Schmelzviskosität und mit erhöhter thermischer und chemischer Belastbarkeit erhalten werden, wenn man in an sich bekannter Weise Di- und gegebenenfalls Tri- bzw. Tetrahalogenbenzole und Alkali- oder Erdalkalisulfide in bestimmten polaren Lösungsmitteln kondensiert, die von gelöstem $O_2$ befreit worden sind. Die Entfernung des gelösten Sauerstoffs kann z.B. durch Ultraschall und/oder Anlegen von Vakuum und/oder Begasen mit geeigneten Gasen, z.B. Edelgasen, $N_2$ etc., oder durch chemische Reaktion mit Sauerstoff-bindenden Agentien erfolgen. Die erhaltenen Polyarylensulfide können ohne härtende Nachbehandlung formgepreßt, extrudiert und zu Fasern versponnen werden. Sie haben im Vergleich zu den bisher marktgängigen Polyarylensulfiden eine wesentlich erhöhte thermische und chemische Belastbarkeit.

Gegenstand der Erfindung ist ein Verfahren zur Herstellung von linearen oder verzweigten hochmolekularen

Polyarylensulfiden mit hoher Schmelzviskosität und erhöhter thermischer und chemischer Belastbarkeit aus

a) Dihalogenbenzolen, von denen 50 bis 100 Mol-% der Formel (I)

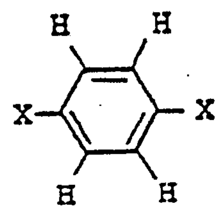

(I)

entsprechen und 0 bis 50 Mol-% der Formel (II)

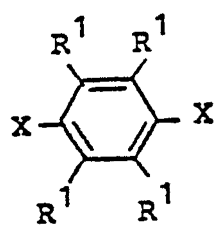

(II)

wobei

X Fluor, Chlor, Brom und Iod, vorzugsweise Chlor und Brom ist und

$R^1$ gleich oder verschieden ist und Wasserstoff, $C_1$-$C_{20}$-Alkaryl oder $C_7$-$C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0 bis 2,4 Mol-%, bevorzugt 0,4 bis 2,0 Mol-%, bezogen auf die Dihalogenbenzole, eines Tri- oder Tetrahalogenaromaten der Formel (III)

$$ArX_n \qquad (III),$$

wobei

Ar ein aromatischer oder heterocyclischer Rest mit 6-24 C-Atomen ist,

X die gleiche Bedeutung wie in Formel (I) und (II) hat, und

n 3 oder 4 ist;

c) einen Alkalisulfid, bevorzugt Natrium- oder Kaliumsulfid oder deren Mischung, bevorzugt in Form der Hydrate oder wäßriger Mischungen, gegebenenfalls zusammen mit Alkalihydroxiden in einem

d) polaren Lösungsmittel, bevorzugt einem Amid oder Lactam, insbesondere einem N-Alkyllactam, wobei das molare Verhältnis von a) zu c) im Bereich von 0,85 :1 bis 1,15:1, bevorzugt 0,95:1 bis 1,05:1 und von c) zu d) im Bereich von 1:2 bis 1:15 liegt,

unter üblichen Reaktionsbedingungen, das dadurch gekennzeichnet ist, daß das polare Lösungsmittel vor und gegebenenfalls während der Polykondensation von gelöstem Sauerstoff befreit wird, wobei die Entfernung des gelösten Sauerstoffs durch Ultraschallbehandlung und/oder Anlegen von Vakuum und/oder Begasen mit geeigneten inerten Gasen beispielsweise Edelgasen oder $N_2$ vor der Polykondensation oder durch eine chemische Reaktion mit Sauerstoff-bindenden Agentien vor oder während der Polykondensation erfolgen kann, und wobei eine Polykondensationszeit von 0,1 bis zu 10 Stunden, vorzugsweise 0,2 bis 5 Stunden und eine Polykondensationstemperatur von 160 bis 300°C, bevorzugt von 200 bis 285°C eingehalten wird.

Als Alkalisulfide werden beispielsweise Lithium-, Natrium-, Kalium- und Rubidiumsulfid, bevorzugt Natrium- und Kaliumsulfid, eingesetzt. Es können auch Mischungen der Alkalisulfide benutzt werden. Sie können in Form ihrer Hydrate oder wäßrigen Mischungen eingesetzt werden oder in der Reaktionslösung in situ verwendet werden.

Als Alkalihydroxide kommen z.B. Lithiumhydroxid, Natriumhydroxid und Kaliumhydroxid sowie deren Mischungen in Frage.

Die Entwässerung der Alkalisulfide erfolgt in bekannter Weise.

Beispiele für die erfindungsgemäß einzusetzenden p-Dihalogenaromaten der Formel (I) sind: p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol. Sie sind allein oder im Gemisch miteinander verwendbar.

Beispiele für die erfindungsgemäß einzusetzenden p-Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für die erfindungsgemäß einzusetzenden Tri- bzw. Tetrahalogenaromaten der Formel (III) sind:

1,2,3-Trichlorbenzol, 1,2,4-Trichlorbenzol, 1,2,4-Tribrombenzol, 1,2,4-Trijodbenzol, 1,3,5-Trichlor-2,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden jedoch Amide und Lactame und insbesondere N-Alkyllactame verwendet.

Lactame im Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z.B. einen Alkylrest mit 1 bis 5 C-Atomen.

N-Alkyllactame im Sinne der vorliegenden Erfindung sind wie die erfindungsgemäßen Lactame definiert, tragen jedoch zusätzlich am Stickstoffatom einen Alkylrest mit 1 bis 6 C-Atomen.

Beispielsweise kommen als Lösungsmittel in Frage:

Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin und N-Ethyl-2-oxo-hexamethylenimin.

Es können auch Mischungen der vorstehenden Lösungsmittel gewählt werden.

Die erfindungsgemäße Entfernung des gelösten Sauerstoffs aus dem polaren Lösungsmittel kann durch Ultraschallbehandlung bei Raumtemperatur oder leicht erhöhter Temperatur und/oder durch Anlegen von Vakuum durchgeführt werden. Möglich ist die Entfernung auch durch Begasen

und somit Herausspülen mit geeigneten inerten Gasen, beispielsweise Edelgasen oder $N_2$, sowie eine Kombination der vorstehenden drei Maßnahmen. Eine zusätzliche Möglichkeit ist die Entfernung des Sauerstoffs durch eine chemische Fixierung, d.h. durch eine chemische Reaktion mit Sauerstoff-bindenden Agentien vor oder während der Polykondensation. Bevorzugt wird Sauerstoff jedoch durch Begasen mit He oder durch chemische Reaktion vor der Polykondensation entfernt. Zur chemischen Fixierung bzw. Entfernung des Sauerstoffs ist z.B. $H_2$ in Gegenwart von Katalysatoren z.B. polymer gebundenem Pd geeignet.

Die Ultraschallbehandlung erfolgt unter folgenden Bedingungen:
Der durch Ultraschall herausgetriebene Sauerstoff wird durch Überleiten eines Inertgasstromes entfernt. Durch erhöhte Temperatur kann die Entgasung beschleunigt werden. Ebenso bewirkt gleichzeitiger Unterdruck eine Steigerung der Entgasungsgeschwindigkeit.
Auch durch Anlegen von Vakuum allein ist eine Entfernung des Sauerstoffes möglich. Hierbei wird durch ein Pumpenvakuum der Druck bis kurz über den Siededruck der Lösung erniedrigt.

Das Begasen mit geeigneten inerten Gasen erfolgt durch Einleiten eines intensiven Stroms eines Inertgases, der Sauerstoff aus der Lösung austreibt. Bevorzugt wird Helium als Inertgas eingesetzt.

Chemisch kann Sauerstoff durch geeignete Reduktionsmittel aus der Reaktionslösung entfernt werden. Beispielsweise ist dazu Hydrazin und Wasserstoff in Verbindung mit Katalysatoren in der Lage. Bevorzugt wird jedoch $H_2$ als Gas im Gegenstrom bzw. stationär, z.B. mit $H_2$ beladener Metallschwamm eingesetzt. Als Katalysator wird entweder ein geeignetes Metall, z.B. Pd, auf einem Träger oder der Metallschwamm selbst verwendet.

Die Kondensationstemperatur für die Herstellung der Polyarylensulfide ist in der Regel 160 bis 300°C, bevorzugt 200 bis 285°C. Die Reaktionszeit kann von 0,1 bis 10 Stunden beantragen, liegt jedoch vorzugsweise zwischen 0,2 bis 5 Stunden. Eine stufenweise Steigerung der Reaktionstemperatur während dieser Zeit ist von Vorteil.

Das Dihalogenbenzol und das Alkalisulfid werden möglichst äquimolar umgesetzt. Das Molverhältnis Dihalogenbenzol/ Alkalisulfid liegt demgemäß bevorzugt im Bereich von 0,95:1 bis 1,05:1. Es kann jedoch auf den Bereich 0,85:1 bis 1,15:1 erweitert werden.

Die erfindungsgemäß einzusetzenden Tri- bzw. Tetrahalogenaromaten der Formel (III) können bis zu einer Menge von mehreren Mol-%, bezogen auf den Anteil Dihalogenbenzol, je nach den Versuchsbedingungen zusammen mit den p-Dihalogenbenzolen oder getrennt zugesetzt werden, in der Regel wird jedoch ein Anteil von 0 bis 2,4 Mol-%, vorzugsweise 0,4 bis 2,0 Mol-%, bezogen auf den Anteil Dihalogenbenzol, ausreichend sein.

Die Menge Lösungsmittel kann in einem weiten Bereich gewählt werden, liegt im allgemeinen jedoch bei 2 bis 15 Mol pro Mol Alkalisulfid.

Die Aufarbeitung des Reaktionsgemisches, Isolierung und Reinigung der erfindungsgemäß hergestellten Polyarylensulfide kann in bekannter Weise erfolgen, beispielsweise durch Zugabe von Wasser zur abgekühlten

Reaktionsmischung und Filtration des Reaktionsproduktes auf anschließender Wäsche oder beispielsweise durch Abziehen des Lösungsmittels mit anschließender Wäsche.

Die erfindungsgemäßen Polyarylensulfide können auch mit anderen Polymeren, mit Pigmenten und Füllstoffen, wie beispielsweise Graphit, Metallpulver, Glaspulver, Quarzmehl oder Glasfasern gemischt oder mit den für Polyarylensulfide üblichen Additiven, wie beispielsweise üblichen Stabilisatoren oder Entformungsmitteln, versetzt werden.

Im allgemeinen wird das Schmelzfließverhalten von Polyarylensulfiden nach ASTM 1238-70 bei 316°C unter Verwendung eines 5 kg-Gewichtes gemessen und in g/10 Min. angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta_m$ der Polymerschmelze (in Pa.s) bei 306°C in Abhängigkeit von der Schubspannung $\tau$ (in Pa) mit Hilfe des Instron-Rotationsviskosimeters bestimmt.

Man kann auf diese Weise die Schmelzviskosität in einem sehr weiten Bereich von $10^{-1}$ bis $10^{7}$ Pa.s genau bestimmen. In dem Instrom-Rheometer wird das Polymer zwischen einer festen Platte und einem drehbaren Kegel geschmolzen und das Drehmoment des Kegels bestimmt. Aus dem

Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemäßen p-Polyarylensulfide besitzen direkt nach der Isolierung aus dem Reaktionsgemisch im allgemeinen Schmelzviskositäten von $0,5 \times 10^3$ bis $5 \times 10^5$ Pa.s und höher, vorzugsweise aber von $1,5 \times 10^3$ bis $10^4$ Pa.s. Sie können direkt durch Extrusion, Extrusionsblasen, Spritzgießen oder sonst übliche Verarbeitungstechniken zu Folien, Formkörpern oder Fasern verarbeitet werden, welche in üblicher Weise Verwendung finden als Automobilteile, Armaturen, Elektroteile, z.B. Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile, etc.

Beispiel 1

Dieses Beispiel beschreibt zum Vergleich die Herstellung von Polyphenylensulfid gemäß US-PS 3 354 129.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202°C erwärmt. Dabei destillieren insgesamt 19 ml Wasser ab. Der Ansatz wurde anschließend auf ca. 160°C heruntergekühlt und 147 g p-Dichlorbenzol (≙ 1 Mol) in ca. 50 g N-Methyl-2-pyrrolidon hinzugefügt. Man erwärmt das Reaktionsgemisch unter dem Stickstoffvordruck von 2,5 bar in 30 Minuten auf 245°C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80°C im Vakuum und erhält 100,3 g (93 %) Poly-p-phenylensulfid mit folgenden Kenndaten:

Schmelzviskosität $\eta_m$ = 4,5 Pa.s (bei $\tau = 10^2$ Pa). Eine thermoplastische Verarbeitung ist ohne Härtung nicht möglich.

Beispiel 2

500 ml N-Methylpyrrolidon wurden bei 0,1 bar im Ultraschallbad entgast. Nach Zugabe von 191,6 g Natriumsulfidhydrat (1,455 Mol) und einer entsprechenden Menge Natriumhydroxid zur Neutralisation von im Ansatz enthaltenen Natriumhydrogensulfid wurde durch langsames Aufheizen bis auf 175°C 35,5 ml eines Destillates, das zum größten Teil Wasser enthielt, erhalten.

Anschließend wurden 220,5 g p-Dichlorbenzol (1,50 Mol) und 2,72 g (0,015 Mol) 1,2,4-Trichlorbenzol in 70 ml N-Methylpyrrolidon, das wie oben vorbehandelt war, zugesetzt, und nach Verschließen des Autoklaven das Reaktionsgemisch in 90' von 200°C auf 270°C gebracht und 120 Min. dabei gehalten.

Nach Reaktionsende läßt man auf 150°C abkühlen, entspannt und entnimmt das Reaktionsgemisch. Das entstandene p-Polyphenylensulfid wird abgetrennt und sorgfältig mit Wasser von anhaftenden Salzen befreit. Das p-Polyphenylensulfid wird nach Trocknen als grauweißer Feststoff isoliert. Schmelzviskosität $\eta_m$ = 1650 Pa.s (bei $\tau = 10^2$ Pa).

Beispiel 3

Wie Beispiel 2, jedoch Entfernung des $O_2$ aus N-Methylpyrrolidon nicht über Ultraschall sondern mittels Durchleiten von Helium. Schmelzviskosität $\eta_m$ = 1720 Pa.s (bei $\tau = 10^2$ Pa).

Beispiel 4

Wie Beispiel 2, jedoch wurde 0,2 durch Reaktion mit $H_2$ an polymer gebundenen Pd aus dem Lösungsmittel entfernt, das von Katalysator getrennt unter Luftausschluß in den Ansatz eingebracht wurde. Schmelzviskosität $\eta_m$ = 1980 Pa.s (bei $\tau = 10^2$ Pa).

Beispiel 5

Ein nach Beispiel 1 gewonnenes p-Polyphenylensulfid wurde bei 290°C 2 Stunden in N-Methylpyrrolidon erhitzt. Nach der Aufarbeitung konnte kein Polymeres wiedergewonnen werden, viel mehr wurde eine stark nach Thiophenol riechende Flüssigkeit erhalten; das Polymere war zu löslichen niedermolekularen Verbindungen abgebaut worden.

Beispiel 6

Wie Beispiel 5, jedoch mit nach Beispiel 2 gewonnenen p-Polyphenylensulfid. Der Abbau des Polymeren war auf 17,3 % reduziert. Die Nachbehandlung mit siedendem Toluol ergab 79 % ursprüngliches Polymeres des Beispiels 2.

Beispiel 7

Wie Beispiel 5, jedoch mit nach Beispiel 3 hergestellten p-Polyphenylensulfid. 19,1 % des Polymeren waren abgebaut, nach der Behandlung mit siedendem Toluol wurden

77,2 % p-Polyphenylensulfid des Beispiels 3 zurückgewonnen.

Beispiel 8

Wie Beispiel 5, jedoch mit nach Beispiel 4 hergestelltem p-Polyphenylensulfid. Der Abbau der Polymeren war auf 14,6 % reduziert. Die Nachbehandlung mit siedendem Toluol ergab 80,7 % Polymeres des Beispiels 4.

Patentansprüche

1. Verfahren zur Herstellung von hochmolekularen linearen oder verzweigten Polyarylensulfiden aus

a) Dihalogenbenzolen, von denen 50 bis 100 Mol-% der Formel I

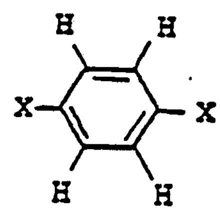

(I)

entsprechen, und
0 bis 50 Mol-5 der Formel II

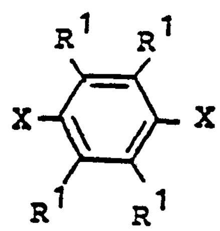

(II)

wobei
X Fluor, Chlor, Brom oder Iod und
$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0 bis 2,4 Mol-%, bezogen auf die Dihalogenbenzole eines Tri- oder Tetrahalogenaromaten der Formel III

$$Ar\ X_n \qquad (III)$$

wobei

Ar ein aromatischer oder heterocyclischer Rest mit 6-24 C-Atomen ist,

X die gleiche Bedeutung wie in Formel I und II hat, und

n = 3 oder 4 ist;

c) ein Alkalisulfid in einem

d) polaren Lösungsmittel,

wobei das molare Verhältnis von a) zu c) im Bereich von 0,85:1 bis 1,15:1 und c) zu d) im Bereich von 1:2 bis 1:15 liegt, unter üblichen Reaktionsbedingungen, dadurch gekennzeichnet, daß das polare Lösungsmittel vor und gegebenenfalls während der Polykondensation von gelöstem Sauerstoff befreit wird, wobei die Entfernung des gelösten Sauerstoffs durch Ultraschallbehandlung und/oder Anlegen von Vakuum und/oder Begasen mit geeigneten inerten Gasen vor der Polykondensation oder durch eine chemische Reaktion mit Sauerstoff-bindenden Agentien vor oder während der Polykondensation erfolgen kann und wobei eine Polykondensationszeit

von 0,1 bis 10 Stunden und eine Polykondensationstemperatur von 160°C bis 300° eingehalten wird.

Europäisches Patentamt

**EUROPÄISCHER RECHERCHENBERICHT**

0087046

Nummer der Anmeldung

EP 83101120.0

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| X | US - A - 3 786 035 (J. SCOGGIN)<br>* Zusammenfassung; Spalte 2, Zeilen 64-70 *<br>-- | 1 | C 08 G 75/02 |
| D,X | DE - A1 - 2 623 362 (PHILLIPS PETROLEUM CO.)<br>* Seiten 11-14 *<br>-- | 1 | |
| A | US - A - 3 940 375 (M. O'SHAUGHNESSY et al.)<br>* Beispiel 1 *<br>---- | 1 | |
| | | | RECHERCHIERTE SACHGEBIETE (Int. Cl. ³) |
| | | | C 08 G 75/00 |

Der vorliegende Recherchenbericht wurde für alle Patentansprüche erstellt.

| Recherchenort | Abschlußdatum der Recherche | Prüfer |
|---|---|---|
| WIEN | 11-05-1983 | KALTENEGGER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82